(19) Europäisches Patentamt
European Patent Office
Office européen des brevets

(11) **EP 2 148 297 A1**

(12) **EUROPEAN PATENT APPLICATION**

(43) Date of publication:
**27.01.2010 Bulletin 2010/04**

(51) Int Cl.:
***G06T 3/00*** (2006.01)

(21) Application number: **08252513.0**

(22) Date of filing: **24.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **BRITISH TELECOMMUNICATIONS public limited company**
**London**
**EC1A 7AJ (GB)**

(72) Inventor: **The designation of the inventor has not yet been filed**

(74) Representative: **Nash, Roger William et al**
**BT Group Legal**
**Intellectual Property Department**
**PP C5A, BT Centre**
**81 Newgate Street**
**London**
**EC1A 7AJ (GB)**

(54) **Video display interface**

(57)     A video replay device displays a "current" frame (still or moving) in a display area 1. A second area 2 adjacent the first shows an arrangement of samples each representing a respective temporal part of the material and arranged in chronological order; as shown these are vertical strips each being the average of a number of such strips taken from the centre of successive subsampled frames. A third area may display a succession of horizontal strips. A user can operate a mouse or remote control to position a cursor over a strip of the display. The interface responds by sending a command for initiation of display of the audio-visual material commencing at the position corresponding to the selected strip.

Display Area 2 (Side)

Display Area 1 (Front)

Display Area 3 (Bottom)

Figure 1

**Description**

The present invention is concerned with the replay of video or audiovisual material, and in particular with a user interface for the control of such replay.

Current video navigation techniques on DVD's only allow the user to skip to pre-defined places in a movie or other audiovisual material and the usual interface is simply to show a representative image from the scene. In video editing software, video timelines are usually shown as a video frame at the start of a time period. The only other mechanism to move forward or backward in a movie is to 'fast-forward' or 'rewind'.

The present invention is defined in the claims.

Some embodiments of the invention will now be described, by way of example, with reference to the accompanying drawings.

The example of the invention now to be described is an apparatus for the replay of video recordings stored on a hard disc, but it will be understood that it can equally well be applied to material recorded on other media, either locally to the user or remotely - as in the case, for example, of a video-on-demand system.

The inventors consider it useful in the area of video browsing to be able to see information about the whole of a video recording to enable a user to quickly navigate to a place of interest in the video.

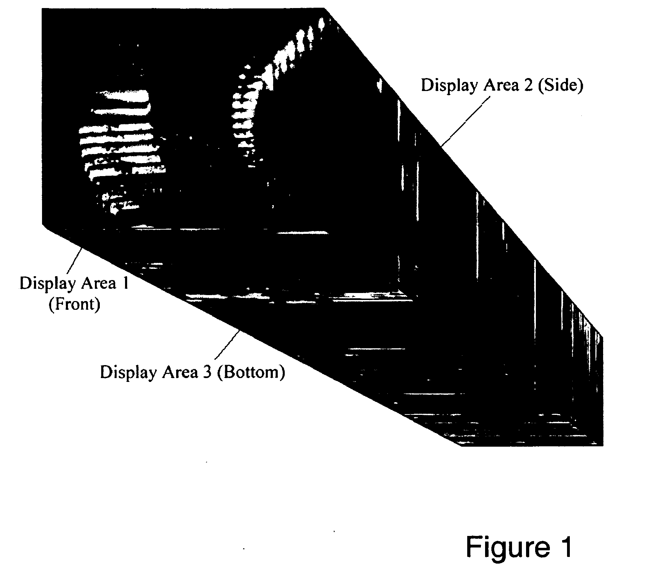

The apparatus extracts information from a whole video sequence, such as a movie and displays it in such a way that it makes it easy for a user viewing the screen to see which parts might be interesting to navigate to and view next. Such a display is shown in Figure 1. Of necessity, the Figure is shown in monochrome, though in practice a colour display would be preferred. A first, rectangular display area 1 displays a frame from a current position in the video sequence. A second display area 2, adjacent the first, shows an oblique, nominally horizontal, series of representative vertical stripes from successive temporal positions of the video sequence, whilst a third display area 3 shows an oblique, nominally vertical, series of representative horizontal stripes from the video sequence. It is not actually essential to have both of the areas 2 and 3. As shown, these three areas are (purely for aesthetic reasons) displayed as if they were the front, side and bottom of a parallelepiped, and for brevity, referred to as the front, side and bottom areas. The area 2 could equally well lie to the left and/or the area 3 might lie above, the area 1.

This may be visualised as if a pack of cards were spread on a table. One can see all of the top card (analogous to the current frame of the movie); and all the cards below the top card are partially visible (analogous to subsequent frames of the movie).

An example means to create such a display is now described. Alternative methods are also possible, some of which are subsequently described.

The initial viewing position is set to be the beginning of the video sequence. The first frame of the video sequence is selected, and filtered and sub-sampled to create the rectangular display area 1 shown in Figure 1, as the whole frame at normal resolution is assumed to fill the entire display.

To create display area 2 (side) and display area 3 (bottom), the frames of the video sequence are sub-sampled temporally, such that one frame is sampled every second.

To create display area 2 (side), a 16 wide column of pixels is copied from the middle of each sampled frame, and these are placed beside one another, with each strip being ordered as the frames in the video sequence, with those nearer the beginning being to the left of those nearer the end. The resulting rectangular set of pixels has height equal to the height of the original video frames, and width equal to 16 times the number of sampled video frames. It is then resized vertically exactly as the whole of the current video frame had been, as above, and resized horizontally (also by filtering and sub-sampling) to give a rectangle of appropriate resolution for the display device. For example, on a display device supporting 1920 pixels per line, and the current video frame being reduced by a factor of three to 640 pixels, there would be 1280 pixels left for the rectangle. There would be 7200 sampled video frames in the case of a two hour movie, thus requiring the number of pixels horizontally to be reduced from 16x7200 to 1280, equivalent to resizing each column of 16 pixels to a width of less than one fifth of a pixel. A geometric distortion, such as an affine transform, is then applied to this rectangular set of pixels to distort it into a trapezium, to give the impression of perspective. In this example, the lower horizontal edge of the rectangle is rotated clockwise by 45 degrees, and the right hand vertical edge is half of the height of the left hand vertical edge.

Display area 3 (bottom), if created at all, would be created in a similar fashion to display area 2, but with a 16 high strip of pixels being copied from the middle of the each sampled frame, and placed one below another, with each strip being ordered as the frames in the video sequence, with those nearer the beginning being above those nearer the end. The resulting rectangular set of pixels has width equal to the width of the original video frames, and height equal to 16 times the number of sampled video frames. It is then resized horizontally exactly as the whole of the current video frame had been, as above, and resized vertically by the same factor as the previous rectangle had been horizontally, with the factor being selected taking the resolution of the display device into account. For example, on a display device supporting 1080 lines, the current video frame may be reduced by a factor of three both vertically and horizontally, resulting in 360 lines vertically, leaving 720 lines for the rectangle. The 16x7200 vertical pixels would be reduced to 1280 if the same reduction ratio were used as had been used on the previous rectangle (display area 2). This is more than the 720 pixels available, and hence is not acceptable. Consequently, if both the side and bottom regions are to be displayed, the reduction ratio of the longer edges of the rectangles must be determined by the bottom rectangle, with the reduction ratio being set to reduce 16x7200 to 720 pixels in both rectangles. A geometric distortion is then again applied to distort this into a trapezium, to give the impression of perspective. In this example, the right hand vertical edge of the rectangle is rotated anti-clockwise by 45 degrees, and the lower horizontal edge is half of the width of the upper horizontal edge.

The two trapeziums, representing display areas 2 and 3 are then placed alongside the current video frame 1 to create Figure 1.

It is not necessary for the lower edge of the side rectangle to be rotated clockwise by 45 degrees and for the right hand edge of the bottom rectangle to be rotated anti-clockwise by 45 degrees. But it is preferable for the sum of the magnitudes of these rotations to be 90 degrees, so that when they are placed alongside the current video frame, they join together with no gap and no overlap, unless a "spine" is to be created, as described later. When these rotations are not 45 degrees, the prior scaling of the long dimensions of the rectangles will not be by the same factor, but must be such that the edges of the resulting trapeziums that join to make Figure 1 have the same length.

In the following example, we reduce the current video frame both horizontally and vertically by a factor of three from 1920x1080 to 640x360, and wish the resulting figure to maximise the use of the whole display, assumed to be 1920x1080. By applying simple trigonometry, we find that the width of side rectangle that will become display area 2 must be reduced by a factor of $(1920-640)/(16\times7200) \sim 0.011$, and its lower edge must be rotated clockwise by an angle of $\arctan((1080-360)/(1920-640)) \sim 29$ degrees. And the height of bottom rectangle that will become display area 3 must be reduced by a factor of $(1080-360)/(16\times7200) = 0.00625$, and its lower edge must be rotated anti-clockwise by an angle of $90 - \arctan((1080-360)/(1920-640)) \sim 61$ degrees.

The content of a video sequence visualised in this way gives a view of the different scenes in the video sequence and allows a user to control a movable cursor, by means of a mouse, or other control device, so as to select a different position in the movie to continue viewing from. The different scenes generally show up as different colour bands down the side and across the bottom, making it easy to see where there are changes, and where particular scenes are located.

There may be different stages in the process of selection - one example might be

a) The user merely positions the cursor over the stripe in the side or bottom area that corresponds to frame N of the movie: the apparatus may respond (to make navigation easier) by expanding the adjacent part of that area, to provide a 'zoom in' facility to make it easier to pick the start of a sequence; by displaying still frame N (or a moving picture starting at frame N) in a "pop-up" window; and/or by playing an accompanying soundtrack, starting at frame N.

b) The user makes a more positive selection, perhaps by positioning the cursor over the stripe in the side or bottom area that corresponds to frame N of the movie and pressing the secondary mouse button: the display switches to a display like that of Figure 1 but with frame N showing in the front display area 1 and stripes from frame N+1 onwards displayed in display areas 2 and 3.

c) The user makes a final selection, e.g. by positioning the cursor over the stripe in the side or bottom area that corresponds to frame N of the movie and pressing the primary mouse button: the display switches to a full-screen display of a moving picture starting at frame N - that is, a normal TV replay mode.

d) Another example might be - if past frames are shown - for the user to click on the front display area and drag diagonally towards the top-left or to the bottom-right to move backward/forward in the movie.

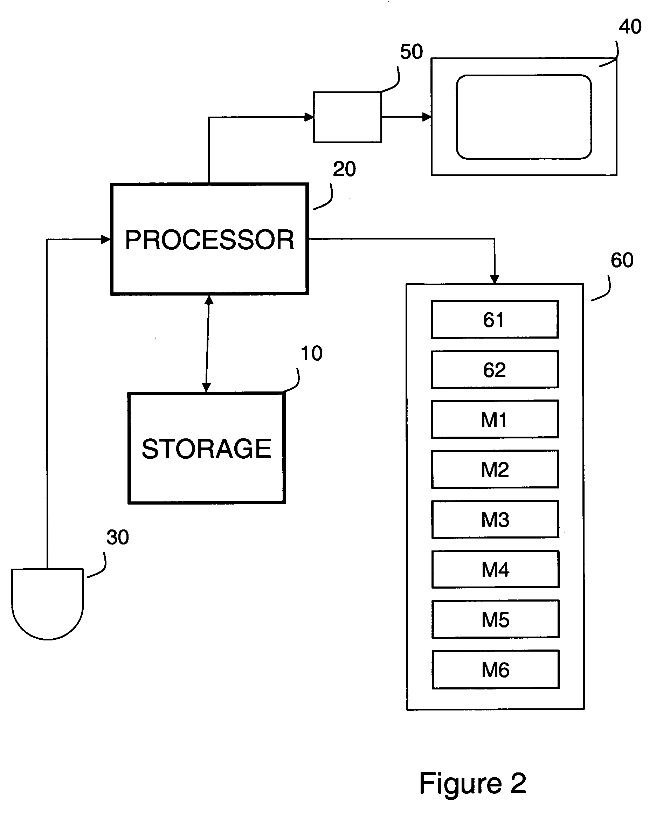

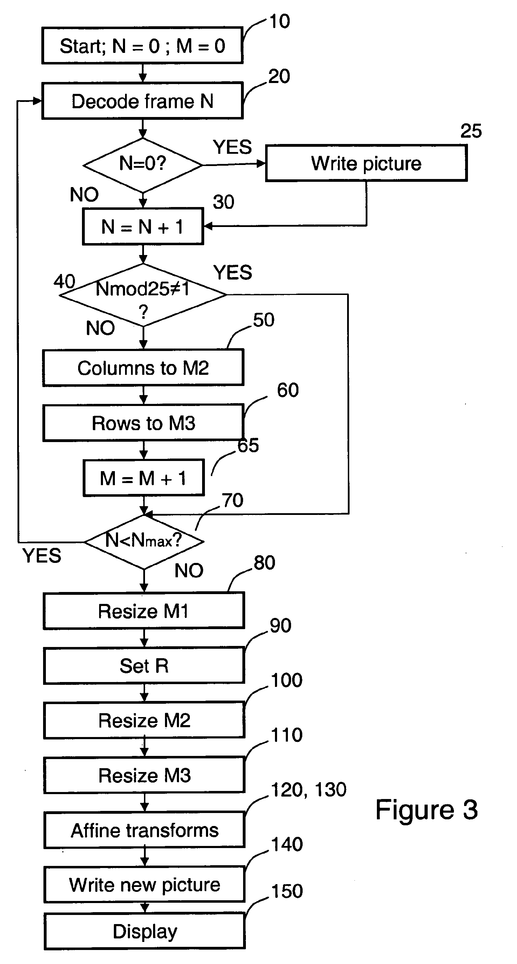

A block diagram of a suitable apparatus is shown in Figure 2. This consists of a hard disk or other suitable storage device 10 containing the video content to be played, connected, either locally or via a network, to a processor 20. A device for user input 30, such as a mouse or a remote control is connected to the processor, which, on receiving signals from the input device, retrieves video data from the storage device 10, processes it to produce a visualisation of the video content as described herein, and displays it appropriately on a display device 40 which displays a picture held in a frame store 50. A memory 60 contains operation system software 61, application programs 62 for implementing the processes described below, and memory areas M1, M2, ... M6 for intermediate storage of digital images or parts thereof, or indexing information. The operation of a first of these software components will be described with reference to the flowchart of Figure 3.

| 10 | Start, N=0, M=0 |
|---|---|
| 20 | Read bits for frame N from storage device 10 and decode to a picture |
| 25 | If N is 0, write the whole picture to memory area M1 |
| 30 | Increment N, a count of the pictures decoded |
| 40 | If N modulo 25 is not 1, goto 70 |
| 50 | Copy the middle 16 columns of the picture to memory area M2 |
| 60 | Copy the middle 16 rows of the picture to memory area M3 |
| 65 | Increment M, a count of the number of strips in memory areas M2 and M3 |
| 70 | If more bits to decode, goto 20 |

80    Resize picture in memory area M1 by 1/3 horizontally and vertically

90    Resize ratio R = 2/3 * Original vertical resolution / (16 * M)

100   Resize picture in memory M2 by 1/3 vertically and R horizontally

110   Resize picture in memory M3 by 1/3 horizontally and R vertically

120   Apply affine transform to the picture in memory M2 to rotate lower edge 45 degrees clockwise and to scale right edge to half the resolution of the left edge

130   Apply affine transform to the picture in memory M3 to rotate right edge 45 degrees anti-clockwise and to scale lower edge to half the resolution of the top edge

140   Create, and write into frame store 50, a new picture starting with that in memory M1, and adding the picture in memory M2 to its right edge and adding the picture in memory M3 to its lower edge

150   Display this new picture

160   End

In practice, we would not create the visualisation as above as the user interacted with the visualisation to navigate through the video sequence, as it would be too computationally intensive and too demanding on the network between the processor and storage device. Instead, we would generate the side and bottom rectangles and resize them before the user accessed the video sequence, storing the result on the storage device, and resize, geometrically transform and locate them as instructed by the user.

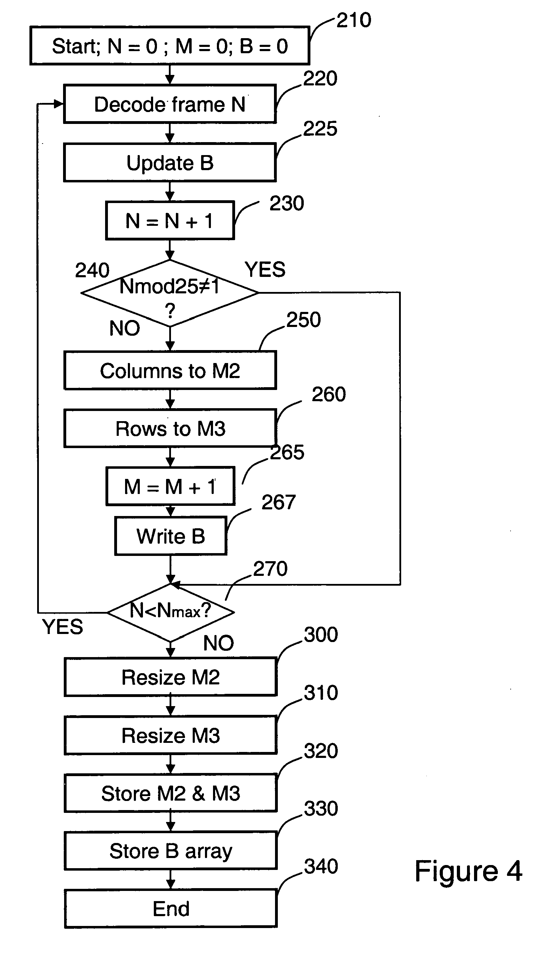

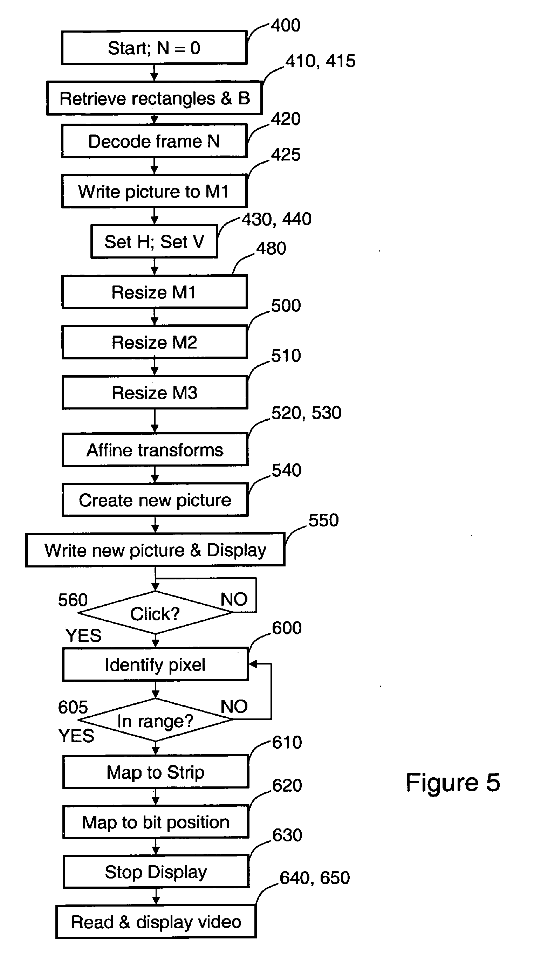

This process will be described with reference to the flowcharts of Figure 4 and Figure 5. Figure 4. Flow chart for off-line creation of visualisation

Note that the long thin rectangles are resized to the screen resolution to give a good compromise between small file size on the storage device and enough resolution for subsequent dynamic rendering. Obviously other intermediate resolutions could be used.

210   Start, N=0, M=0, B=0

220   Read bits for frame N from storage device and decode to a picture

225   Increase B by the number of bits read from the storage device

230   Increment N, a count of the pictures decoded

240   If N modulo 25 is not 1, goto 270

250   Copy the middle 16 columns of the picture to memory area M2

260   Copy the middle 16 rows of the picture to memory area M3

265   Increment M, a count of the number of strips in M2 and M3

267   Write the value of B to memory area M4

270   If more bits to decode, goto 220

300   Resize picture in memory M2 by original horizontal resolution / (16 * M) horizontally

310   Resize picture in memory M3 by original vertical resolution / (16 * M) vertically

320   Store the pictures from memory areas M2 and M3 on the storage device 10

330   Store the bit count indices (i.e. the M values of B that were stored on successive iterations of step 267) of the pictures for which strips were created, by writing the data that are currently in memory area M4 onto the storage device 10

340   End

Figure 5. Flow chart for dynamic creation of visualisation in response to user input Note that this formulation assumes H > V.

400   Start, N=0

410   Retrieve the two rectangles from the storage device 10, and store in memory areas M2 and M3

415   Retrieve the bit count indices from the storage device and store in memory area M4

420   Read bits for frame N from storage device 10 and decode to a picture

425   Write the whole picture to memory area M1

430   Set H to be the horizontal resolution of the picture in M1

440   Set V to be the vertical resolution of the picture in M1

480   Resize picture in memory area M1 by 1/3 horizontally and vertically

500   Resize picture in memory M2 by 1/3 vertically and 2V/3H horizontally, and place the resulting picture in memory area M5 (from H x V to 2V/3 x V/3)

510   Resize picture in memory M3 by 1/3 horizontally and 2/3 vertically, and place the resulting picture in memory area M6 (from H x V to H/3 x 2V/3)

520   Apply affine transform to the picture in memory M5 to rotate lower edge 45 degrees clockwise and to scale right edge to half the resolution of the left edge

530   Apply affine transform to the picture in memory M6 to rotate right edge 45 degrees anti-clockwise and to scale lower edge to half the resolution of the top edge

540   Create a new picture starting with that in memory M1, and adding the picture in memory M5 to its right edge and adding the picture in memory M6 to its lower edge

550   Write this new picture into store 50 and display it, along with a cursor whose position is controllable by the mouse or other input device 30.

560   If user clicks on the trapeziums, goto 600

| | |
|---|---|
| 570 | Goto 560 |
| 600 | Identify which pixel the user selected |
| 605 | If the pixel x,y selected is not within display area 2 or 3, goto 560 |
| 610 | Map the pixel to a strip index. This is a simple linear relationship between horizontal position in display area 2 and strip index m, and a simple linear relationship between vertical position in display area 3 and strip index m. This mapping depends on whether the pixel is in area 2 or area 3: |

$$\text{Area 2:} \qquad m = (x - x_R)/R$$

$$\text{Area 3:} \qquad m = (y - y_B)/R$$

| | |
|---|---|
| | where $x_R, y_B$ are the coordinates of the lower right-hand corner of area 1, and R is the scaling factor defined at step 90 of Figure 3. |
| 620 | Use the indexing information in memory area M4 to map this strip index m to a position in the encoded video file on the storage device.. The value required is simply the m'th element of the set of values of B stored in M4. |
| 630 | Stop displaying the visualisation |
| 640 | Start reading data from the storage device from the given position |
| 650 | Decode and display full screen the video sequence as received from the storage device |
| 660 | End |

## Modifications

Many variations to this implementation are possible. Some of these are described below.

Rather than copying rows and columns of pixels from the sampled video frames, larger numbers of rows and columns, up to and including the whole video frame, could be copied and filtered and sub-sampled before combining with other frames. Alternatively, fewer pixels could be copied from the sampled video frames, thus reducing the extent of resolution reduction required for scaling the rectangles to the display resolution. We have found in experiments that the precise method used to obtain a stripe of pixels from the sampled video frames has little effect on the overall resulting visualisation.

Instead of sampling uniformly in time, such as one video frame per second as described in the above example, the sampling need not be uniform. Instead there could be a higher density of frames near to the front image and a lower density further away. This visualisation may be preferable as it is clearer what is coming up soon, with the parts of the movie 'far away' in time taking up less space - effectively 'far away' in time is mapped to 'far away' in space.

There are a number of ways this could be achieved. One option is to use a perspective transform. Alternatively, the sampling of the frames could be non-linear, with closer samples near the current time and more widely spaced samples further from the current time. With the perspective transform, the offline process could be the same, and the stored long thin rectangles could be transformed using a perspective transform rather than an affine one. In the case of non-linear sub-sampling, the offline process could again be the same, and the stored long thin rectangles could be sub-sampled before applying the affine transform. If it is desired to use one of these options a nonlinear mapping will be required at step 610 or 620.

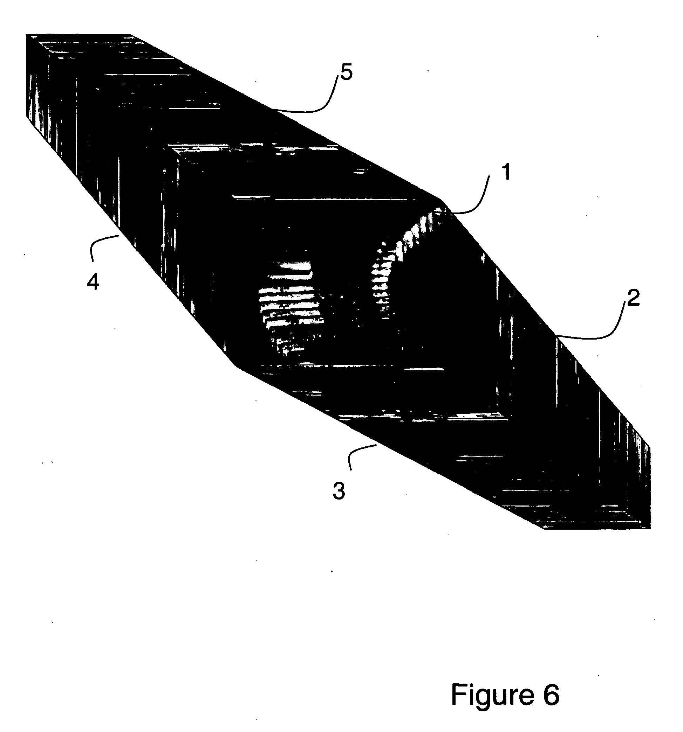

This visualisation need not be static. The front of the visualisation instead of being a still image, could be the video sequence. As the movie plays, the side and bottom would 'move' towards the front, so that the pixels nearest the front represent the video content that is next to be played. In addition, as shown in Figure 6, the visualisation could also show the content that occurs earlier in the video sequence than the current position, in further areas 4 and 5. The sampled pixels from the sampled frames therefore appear over time to move closer to the front (area 1) of the visualisation, become the front momentarily, and then move behind the front into areas 4, 5, disappearing off into the distance (top left corner of the visualisation) in time. Alternatively, this could be viewed as the front of the visualisation moving from top left to bottom right, passing along the trapeziums of past and future sampled frames. In the pack of cards analogy, this is the equivalent to starting with the cards spread on the table, and one at a time, turning the top card over, until all cards have been turned (assuming that the cards have the same picture on each side). In this case, steps 605 and 610 would be amended to:

| | |
|---|---|
| 605 | If the pixel x,y selected is not within display area 2, 3, 4 or 5, goto 560 |
| 610 | Map the pixel to a strip index. This is a simple linear relationship between horizontal position in display area 2 or 4 and strip index m, and a simple linear relationship between vertical position in display area 3 or 5 and strip index m. This mapping depends on which area the pixel is in: |

Area 2: $m = m_N + (x - x_R)/R$

Area 3: $m = m_N + (y - y_B)/R$

Area 4: $m = m_N - (x_L - x)/R$

Area 5: $m = m_N - (y_T - y)/R$

where $m_N$ is the bit index of the picture displayed in area 1 and $x_L, y_T$ are the coordinates of the upper left-hand corner of area 1.

The visualisation could be modified by other properties of the content, including the average motion, the absolute motion and the average volume of the audio track.

The motion present in the video sequence could be obtained either by analysis of the decoded video sequence, or preferably from motion vectors present in the compressed representation of the video sequence.

In a first case, the average absolute motion horizontally and vertically could be calculated over each frame sampling period, such as over each second of the video sequence. The average absolute horizontal motion could be used to modify the width of display area 3, keeping the right hand edge in the same location, and stretching the left hand edge when there is a high level of motion. And the average absolute vertical motion could be used to modify the height of display area 2, keeping the bottom edge in the same location, and stretching the top edge when there is a high level of motion.

In a second case, the average motion horizontally and vertically could be calculated over each frame sampling period, such as over each second of the video sequence. The average horizontal motion could be used to shift a strip of display area 3 to the left or right according to the direction and magnitude of the motion, and the average vertical motion could be used to shift a strip of display area 2 up or down according to the direction and magnitude of the motion.

In a third case, both techniques are used together, with the width and height of strips being varied according to the magnitude of the motion, and the location of the strips (left/right and up/down) being varied according to the direction of the average motion.

Instead, or in addition, the average level of the accompanying audio could be used to modify the visualisation. When used instead of motion, the average audio level could be used to modify the height and width of the strips. When used in addition to motion, either an alternative modification to the visualisation could be used, or, for example, the magnitude of the motion could offset the strips from left to right and the average audio level could offset the strips up and down.

Other variations to the visualisation are possible. The brightness (luminance component) of a stripe could be changed according to some parameter, such as motion or audio level. A "spine" could be created at the join of display area 2 and display area 3, and the brightness or colour of this could changed according to some parameter such as motion or audio level.

## Implications of the modifications

To allow the user to navigate around the video sequence while continuing to view the visualisation rather than the full screen video, the following may be performed.

In the flowchart of Figure 5, step 630 is modified to map the strip index to a frame number N, and flow is returned to step 420, but with subsequent calculation of the scaling ratios in the creation of the visualisation taking into account the extent of the data in memory areas M2 and M3 that must be displayed, given the current position in the video sequence - i.e. stripes from frames earlier than N+1 are to be removed. Note this is why memory areas M5 and M6 are used, so that the data in memory areas M2 and M3 do not need to be retrieved again from the storage device.

To allow the video sequence to play in the visualisation, step 570 is replaced by an automatic change to the position in the file, and flow continues, as immediately above (i.e. "570 increment N and go to step 420"). Note that the trapeziums would not need to be re-rendered for each decoded picture in memory area 1, as they would change at most once per second.

To support the indication of other information, such as average or absolute motion or the average level of audio, this information would be produced in the offline process of Figure 4, and retrieved for use in the dynamic rendering process of Figure 5. Alternatively, this information could be used in Figure 4, thus requiring no change to the process of Figure 5. In this case, the rectangles would be modulated before being stored, for example, for memory area M3, reducing the width of strips according to the parameter, and filling the empty space with the appropriate background colour, such as white.

Note that, in a video on demand system, Figure 4 could be run when the video sequence is encoded, and hence run on some different processor, whereas Figure 5 would be run on the user's machine (PC, set top box, or whatever). In another scenario, where the system is a personal video recorder, Figure 4 may be run as a program is recorded, or at the end of recording, whereas Figure 5 would run at viewing time.

The above use of the scaling factor R assumes that the display area 1 moves on the display so that the amount of space available for the areas 2, 3 (or 2,3, 4, 5) changes in proportion to the playing duration that they represent. This is preferred in relation to Figure 6. If, in Figure 1, it is desired to keep the width of area 2 and height of area 3 constant, then it will be necessary to recalculate the scaling factor R each time the playing duration that they represent changes.

**Claims**

1. A replay device for recorded video material comprising
   replay means for said material;
   means (20, 62) operable to process frames of the material to generate an image for display having

   (a) a first area (1) containing a frame from the material;
   (b) a second area (2) comprising an arrangement of samples each taken from a respective temporal part of the material and arranged in chronological order;

   input means comprising a user-operable control device (30) for adjusting the position of a cursor on the display and means responsive to user selection of a temporal position by positioning the cursor in the vicinity of the strip in the second area that corresponds to that position to send to the replay means a command for initiation of display of the audio-visual material commencing at the selected position.

2. An apparatus according to claim 1 in which each sample in the second area (2) is a strip taken from a respective frame or frames.

3. An apparatus according to claim 2 in which each sample in the second area (2) is a vertical strip taken from the respective frame or frames , and in which the image for display comprises also a third area (3) adjacent the first and comprising an arrangement of samples each being a horizontal strip taken from a respective frame or frames of the material and arranged in chronological order.

4. An apparatus according to claim 3 in which the input means is likewise responsive also to positioning of the cursor in the vicinity of a strip in the third area.

5. An apparatus according to claim 2, 3 or 4 in which each strip is taken through the centre of the respective frame.

6. An apparatus according to any one of the preceding claims in which the samples are taken from a temporally-subsampled subset of the frames of the material.

7. An apparatus according to claim 6 in which the samples are averaged over a plurality of frames.

8. An apparatus according to any one of the preceding claims in which the first area contains a still frame of the material.

9. An apparatus according to any one of claims 1 to 8 in which the first area contains a moving picture from the material.

10. An apparatus according to any one of the preceding claims in which the samples in the second area are taken from parts of the material that lie chronologically later than the frame in the first area, in which the image for display also comprises a further area and comprising an arrangement of samples each taken from a respective temporal part of the material and arranged in chronological order and in which the samples in the further area are taken from parts of the material that lie chronologically earlier than the frame in the first area.

11. An apparatus according to any one of the preceding claims in which the dimensions and/or position of the second and/or third and/or further area are varied, as a function of position in the display, in dependence on one or more of:

    (a) magnitude and/or direction of motion depicted in the video sequence;
    (b) a property of an accompanying sound track.

Display Area 2 (Side)

Display Area 1
(Front)

Display Area 3 (Bottom)

Figure 1

Figure 2

Figure 3

Figure 4

Figure 5

Figure 6

# EP 2 148 297 A1

**EUROPEAN SEARCH REPORT**

Application Number

EP 08 25 2513

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FELS S ET AL: "TECHNIQUES FOR INTERACTIVE VIDEO CUBISM" PROCEEDINGS ACM MULTIMEDIA 2000, 30 October 2000 (2000-10-30), pages 368-370, XP001173137 * page 369, right-hand column, paragraph 7; figures 1,2 * | 1-11 | INV. G06T3/00 |
| X | S. FELS, K. MASE: "INTERACTIVE VIDEO CUBISM" EIGHT ACM INT. CONF. ON INFORMATION AND KNOWLEDGE MANAGEMENT, KANSAS CITY, MISSOURI, US, 1999, pages 78-82, XP002509614 * page 81, left-hand column, paragraph 3; figures 1-3 * | 1-11 | |
| X | RAV-ACHA A ET AL: "Dynamosaics: Video Mosaics with Non-Chronological Time" COMPUTER VISION AND PATTERN RECOGNITION, 2005 IEEE COMPUTER SOCIETY CONFERENCE ON, IEEE, PISCATAWAY, NJ, USA, vol. 1, 20 June 2005 (2005-06-20), pages 58-65, XP010817415 * page 58, right-hand column, paragraph 3 * * page 60, right-hand column, last paragraph - page 61, right-hand column, last paragraph; figures 3,6 * | 1-11 | TECHNICAL FIELDS SEARCHED (IPC) G06T |

-/--

The present search report has been drawn up for all claims

| Place of search | Date of completion of the search | Examiner |
|---|---|---|
| Munich | 18 February 2009 | Pierfederici, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

Europäisches
Patentamt

European
Patent Office

Office européen
des brevets

# EUROPEAN SEARCH REPORT

Application Number

EP 08 25 2513

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MICHAEL WASCHBÜSCH ET AL: "Interactive 3D video editing" THE VISUAL COMPUTER ; INTERNATIONAL JOURNAL OF COMPUTER GRAPHICS, SPRINGER, BERLIN, DE, vol. 22, no. 9-11, 15 August 2006 (2006-08-15), pages 631-641, XP019425229 * page 635, left-hand column, paragraph 2 - paragraph 3; figure 1 * | 1-11 | |
| A | BENNET E P ET AL: "Proscenium: A Framework for Spatio-Temporal Video Editing" PROCEEDINGS OF THE 11TH. ACM INTERNATIONAL CONFERENCE ON MULTIMEDIA. MM'03. BERKELEY, CA, NOV. 4 - 6, 2003, vol. 11, 2 November 2003 (2003-11-02), pages 177-184, XP002379401 * page 179, right-hand column, paragraph 2; figure 5 * | | |
| A | HONGCHENG WANG ET AL: "Seamless video editing" PATTERN RECOGNITION, 2004. ICPR 2004. PROCEEDINGS OF THE 17TH INTERNAT IONAL CONFERENCE ON CAMBRIDGE, UK AUG. 23-26, 2004, PISCATAWAY, NJ, USA,IEEE, vol. 3, 23 August 2004 (2004-08-23), pages 858-861, XP010724795 | | TECHNICAL FIELDS SEARCHED (IPC) |
| A | WO 2006/048875 A (UNIV JERUSALEM YISSUM RES DEV [IL]; PELEG SHMUEL [IL]; RAV-ACHA ALEXAN) 11 May 2006 (2006-05-11) | | |
| A | WO 2007/057893 A (YISSUM RES DEV CO [IL]; PELEG SHMUEL [IL]; RAV-ACHA ALEXANDER [IL]) 24 May 2007 (2007-05-24) | | |

The present search report has been drawn up for all claims

| Place of search | Date of completion of the search | Examiner |
|---|---|---|
| Munich | 18 February 2009 | Pierfederici, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

        .......................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 25 2513

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2009

| Patent document cited in search report | | Publication date | Patent family member(s) | | Publication date |
|---|---|---|---|---|---|
| WO 2006048875 | A | 11-05-2006 | EP | 1854282 A2 | 14-11-2007 |
| WO 2007057893 | A | 24-05-2007 | AU | 2006314066 A1 | 24-05-2007 |
| | | | CA | 2640834 A1 | 24-05-2007 |
| | | | EP | 1955205 A2 | 13-08-2008 |
| | | | KR | 20080082963 A | 12-09-2008 |

EPO FORM P0459

For more details about this annex : see Official Journal of the European Patent Office, No. 12/82